# EUROPEAN PATENT SPECIFICATION

(11) **EP 2 518 477 B1**
(45) Date of publication and mention of the grant of the patent: **17.02.2016**
(21) Application number: 10838507.1
(22) Date of filing: 06.12.2010
(51) Int. Cl.: G01N 23/02

(54) **PORTABLE MONITORING DEVICE FOR RADIOACTIVE SUBSTANCE**
TRAGBARE ÜBERWACHUNGSVORRICHTUNG FÜR RADIOAKTIVE SUBSTANZEN
DISPOSITIF PORTABLE DE SURVEILLANCE DE SUBSTANCES RADIOACTIVES

(30) Priority: 24.12.2009 CN 200910243495
(43) Date of publication of application: 31.10.2012
(73) Proprietor: Nuctech Company Limited, TongFang Building Shuangqinglu Haidian District Beijing 100084 (CN)
(72) Inventor: LI, Yue, Beijing 100084 (CN); SONG, Quanwei, Beijing 100084 (CN); HE, Yu, Beijing 100084 (CN)
(74) Representative: Gevers & Orès
(86) International application number: PCT/CN2010/001967
(87) International publication number: WO 2011/075941

(56) References cited:
- EP-A1- 2 146 225
- CN-A- 101 210 894
- CN-Y- 2 771 855
- GB-A- 2 158 572
- RU-C1- 2 364 890
- US-A- 5 521 595
- US-A1- 2002 104 987
- US-B2- 7 327 270
- DENG, XIANQI ET AL.: 'Research of reducing the shielding effect caused by vehicles passing the Radioactivity Monitor System' NUCLEAR ELECTRONICS & DETECTION TECHNOLOGY vol. 28, no. 1, January 2008, pages 150 - 154
- HUANG DEBAO ET AL.: 'Pedestrian Portal Monitor for Special Nuclear Material' ATOMIC ENERGY SCIENCE AND TECHNOLOGY vol. 34, no. 5, September 2000, pages 445 - 447

## Description

### Technical Field

The present invention relates to a safety detection system for monitoring radioactive substances, particularly relates to a portable radioactive substance monitoring device.

### Background

In the prior art, radioactive substance monitoring systems are generally placed at entrances of customs houses, airports, large-scale public places to detect pedestrians, mobile vehicles, containers etc. for the safety of the public, so as to monitor whether the detected persons, vehicles and containers carry illicit nuclear materials or other radioactive substances. Conventional radioactive substance monitoring devices, in general, are large-scaled both in volume and weight, and are usually fixed on the ground or large-scale bases, thereby it is not convenient to move them.

Therefore, there needs a portable radioactive substance monitoring device which is compact in structure, small in volume, and adapted to be conveniently and quickly placed at entrances of public places, customs ports, and other sites where it is desired, to thereby facilitate radioactive substances monitoring of pedestrians and luggage.

The state of the art includes GB-A-2 158 572 and US-A1-2002/104987.

### Summary of the Invention

In order to achieve the aforesaid object, the present invention provides a portable radioactive substance monitoring device as claimed in claim 1.

According to the invention, the base is detachably connected to the housing.

The housing is provided with at least one first engagement member, and the base is provided with at least one second engagement member corresponding to the at least one first engagement member, shapes of the first and second engagement members being configured to be detachably engaged with each other.

Preferably, said first engagement member and said second engagement member are configured to rotate said housing about said longitudinal axis when said housing is placed on said base so that said first engagement member and said second engagement member corresponding thereto are engaged with each other.

Preferably, said at least one first engagement member are a plurality of said first engagement members which are circumferentially evenly distributed, and said at least one second engagement member are a plurality of said second engagement members that are distributed the same as said plurality of said first engagement members.

Preferably, said first engagement member is an engagement hook, and said second engagement member is a notch capable of receiving said engagement hook; or said second engagement member is an engagement hook, and said first engagement member is a notch capable of receiving said engagement hook.

Preferably, at the lower end of said housing is provided a mounting disc extending transversely to said longitudinal axis, and on said mounting disc is disposed said first engagement member.

Preferably, said base has a disc shape extending transversely to said longitudinal axis.

Preferably, said housing comprises a hollow upper cylinder, a hollow lower cylinder, and a connecting piece for interconnecting said upper cylinder and said lower cylinder.

Preferably, said connecting piece is disposed between said upper cylinder and said lower cylinder, and said upper cylinder and said lower cylinder are

Preferably, said connecting piece is disposed between said upper cylinder and said lower cylinder, and said upper cylinder and said lower cylinder are connected to said connecting piece from two opposite sides of said connecting piece, respectively.

Preferably, said connecting piece has an outwardly extending central flange against which said upper cylinder and said lower cylinder rest from said two sides, respectively.

Preferably, said connecting piece further has a through hole extending along said longitudinal axis to allow cables for transferring electric power, data and/or signals between said upper cylinder and said lower cylinder to pass therethrough.

Preferably, there is a seal ring disposed at where said upper cylinder and said lower cylinder are connected to said connecting piece.

Preferably, said connecting piece has an upper end wall and a lower end wall, each of which forms as a mounting base for mounting one of said detector and said circuitry and the other, respectively.

Preferably, said device further comprises a stop mechanism for preventing looseness and/or rotation of said upper cylinder and/or said lower cylinder relative to said connecting piece.

Preferably, said connecting piece has an outer peripheral wall in which an opening is provided; said stop mechanism comprises a pressing block which is provided within said connecting piece and a fastener by which at least a portion of said pressing block is passed through said opening and pressed towards inner walls of said upper cylinder and/or said lower cylinder.

Preferably, said fastener is an adjustable fastener.

Preferably, said connecting piece is substantially cylindrical in shape.

Preferably, said circuitry is fixedly connected to the lower end wall of said connecting piece and is located within said lower cylinder, while said detector is mounted above the upper end wall of said connecting piece and is located within said upper cylinder.

Preferably, between said detector and the upper end wall of said connecting piece is provided a shock absorbing piece for shock absorption.

Preferably, said detector includes a gamma ray detector and/or a neutron detector.

Preferably, said alarm makes an alarm by any one of acoustic signals, light signals, electrical signals, wireless communication signals and wire communication signals, or by any combination thereof.

Preferably, a portion of said housing that encases said alarm is made of a transparent or translucent material.

Preferably, said alarm is disposed adjacent to a top portion of said housing.

Preferably, said housing further comprises a detachable top cover.

Preferably, said device further comprises a power supply box for containing batteries, said power supply box being mounted below said mounting disc and being encased within said base.

Preferably, said power supply box further comprises a space for accommodating power cables.

Preferably, said device further comprises: a switch for starting or stopping operation of said device; and/or an internet cable interface for communication with the outside.

Preferably, said housing is further provided with lugs for connecting an isolation belt, positions of said lug being configured to cooperate with other standard isolation piles so as to provide an isolation belt between said device and said standard piles.

Preferably, an overall height of said device is substantially the same as a height of said standard isolation pile.

Preferably, a general profile of said device is substantially similar to a profile of said standard isolation pile.

The portable radioactive substance monitoring device of the present invention configured as stated above is advantageous in compact structure, aesthetic appearance, easy assembling, convenient carryover, and so on, thereby capable of making up deficiencies in devices of the prior art.

### Brief Description of the Drawings

These and other objects and advantages of the present invention will become more apparent from the following detailed description in conjunction with the accompanying drawings, wherein:
Fig. 1 is an illustrative perspective view that integrally shows a portable radioactive substance monitoring device of the present invention.
Fig. 2 is an integral cross sectional view of the portable radioactive substance monitoring device of the present invention.
Fig. 3 is a partially enlarged view that shows connection of the upper cylinder and the lower cylinder of the housing by means of a connecting piece.
Fig. 4 is a partially enlarged view that shows connection of the alarm with the top cover and the housing.
Fig. 5 is a perspective view of the portable radioactive substance monitoring device of the present invention as seen from another perspective, wherein the base is detached from the mounting disc.
Fig. 6 is an illustrative view of an unassembled base.
Fig. 7 illustrates a partially assembling view of mounting the base to the mounting disc, with a power supply box also illustrated.
Fig. 8 illustrates a partial view of the top portion of the device in the present invention, illustrating a lug disposed on a side portion of the housing.

### Detailed Description of the Invention

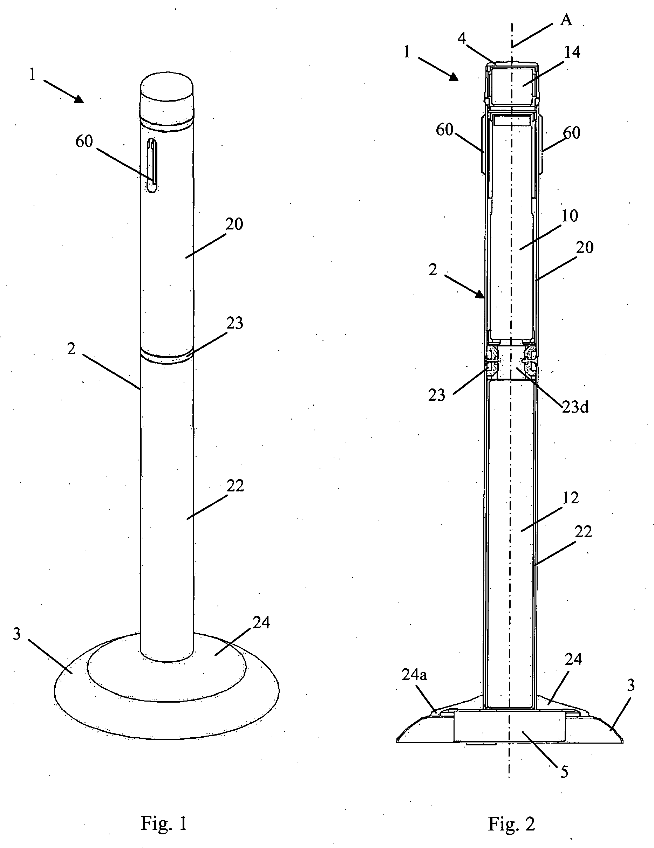

Now with reference to the figures, one preferred embodiment of the present invention is described in details. Referring to figs. 1 and 2, a portable radioactive substance monitoring device 1 of the present invention comprises an elongated cylindrical housing 2 and a base 3. Said housing 2 has a longitudinal axis A extending along a length direction thereof, and includes a hollow section within which are provided: a detector 10 for monitoring radioactive substances; a circuitry 12 connected to said detector, for processing detection signals from said detector; and an alarm 14 connected to said circuitry, for sending out alarm signals upon detection of radioactive substances. The housing 2 at a lower end thereof is detachably connected to the base 3.

In this embodiment, the housing 2 is configured to comprise a hollow upper cylinder 20, a hollow lower cylinder 22, and a connecting piece 23 for interconnecting the upper cylinder 20 and the lower cylinder 22 which two cylinders may have the same outer diameter. After the device 1 of the present invention has been assembled, a hollow section of the upper cylinder 20 and a hollow section of the lower cylinder 22 constitute a hollow section of the housing 2 so as to accommodate therein the detector 10, the circuitry 12 and the alarm 14. In the illustrated embodiment, the detector 10 is disposed within the upper cylinder 20 of the housing, and the circuitry 12 is disposed in the lower cylinder 22 of the housing. But it is apparent that the detector 10 also can be disposed in the lower cylinder 22 of the housing and the circuitry 12 in the upper cylinder 20 of the housing in other embodiments.

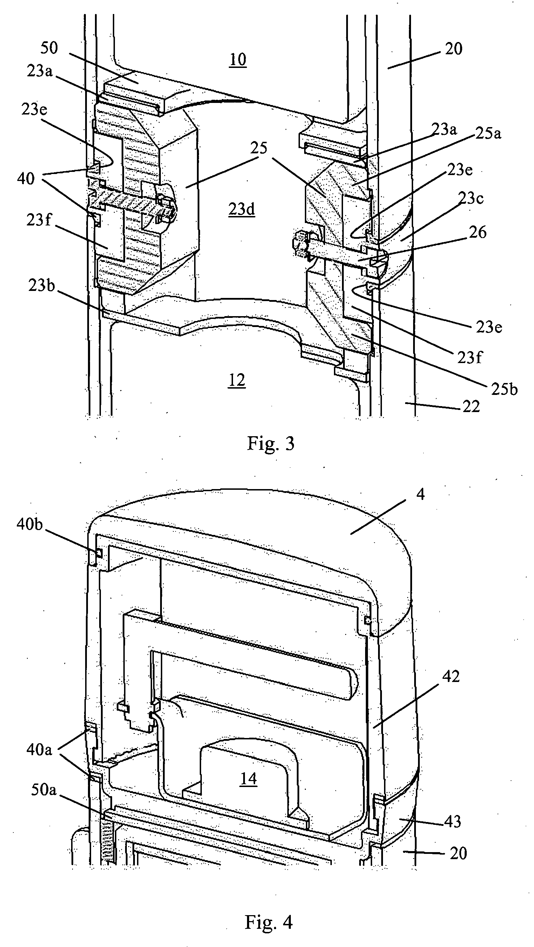

As shown in figs. 2 and 3, the connecting piece 23 is substantially cylindrical in shape, and comprises an upper end wall 23a, a lower end wall 23b and an outer peripheral wall 23f therebetween. The outer peripheral wall 23f defines therein a central through hole 23d extending along the longitudinal axis A. The outer peripheral wall 23f is formed at its central position with a central flange 23c extending radially outwardly. The outer peripheral wall 23f is formed at an upper portion and a lower portion thereof with a connecting structure, such as an external thread or other snap connecting structure, for connecting the upper cylinder 20 and the lower cylinder 22, respectively. The upper cylinder 20 is formed on an inner circumferential surface at a longitudinal lower end thereof with a corresponding connecting structure (such as an internal thread or a corresponding snap connecting structure), and the lower cylinder 22 is also formed on an inner circumferential surface at a longitudinal upper end thereof with a corresponding connecting structure (such as an internal thread or a corresponding snap connecting structure) for respective engagement with the connecting structure at the upper portion and the lower portion of the outer peripheral wall 23f of the connecting piece 23 (such as thread engagement or other snap engagement). During assembling, the upper cylinder 20 and the lower cylinder 22 are connected to the connecting piece 23 until the upper cylinder 20 and the lower cylinder 22 rest against the central flange 23c from two sides thereof, respectively.

A diameter defined by the outer circumferential surface of the central flange 23c can be equal to the outer diameter of the upper cylinder 20 and that of the lower cylinder 22 so that after the device of the present invention has been assembled, the entire housing 2 has substantially same diameter at each position along the longitudinal axis A thereof. Additionally, an annular groove 23e is formed respectively at a place on upper and lower sides of the central flange 23c and adjacent to the central flange 23c, and in the outer peripheral wall 23f of the connecting piece 23, so as to accommodate a seal ring 40 therein. After the device 1 of the present invention has been assembled, the seal ring 40 is tightly pressed between the upper and lower cylinders 20 and 22 and the connecting piece 23 so as to prevent any foreign matter (such as water or dust) from intruding into the device 1 of the present invention.

In order to prevent any looseness between the upper and lower cylinders 20 and 22 and the connecting piece 23, and/or in order to prevent rotation of the upper and lower cylinders 20 and 22 relative to the connecting piece 23, the device 1 of the present invention further comprises a stop mechanism. In the embodiment shown in fig. 3, the stop mechanism comprises a pressing block 25. Although there are two pressing blocks 25 shown in fig. 3, the number of the pressing blocks is optional. Each pressing block 25 has an upper raised portion 25a and a lower raised portion 25b, extending through an opening provided in the outer peripheral wall 23f of the connecting piece to rest against inner walls of the upper cylinder 20 and the lower cylinder 22, respectively. The stop mechanism shown in fig. 3 further comprises a fastener 26, such as a bolt. As shown, the fastener 26 passes through the central flange 23c of the connecting piece 23 and in turn through the pressing block 25. When the fastener 26 is tightened, the fastener 26 forces the pressing block 25 to move radially outwardly, so that the upper raised portion 25a and the lower raised portion 25b of the pressing block 25 are closely pressed against the inner wall of the upper cylinder 20 and the inner wall of the lower cylinder 22, respectively, to thereby prevent the upper cylinder 20 and the lower cylinder 22 from any possible looseness and/or rotation relative to the connecting piece 23 by means of frictional forces. It should be appreciated that other stop mechanisms can also be employed, for example, a fastener (such as a screw) can be passed through the upper cylinder 20/the lower cylinder 22 to be threaded into the connecting piece 23.

The upper end wall 23a and the lower end wall 23b can be formed into a mounting base for mounting the detector 10 and the circuitry 12, respectively. Before the connecting piece 23 is connected to the upper and lower cylinders 20 and 22, the detector 10 can be placed above the upper end wall 23a of the connecting piece 23, and the circuitry 12 is fixedly connected to the lower end wall 23b of the connecting piece 23 by means of a fastener, such as a screw, a bolt. In such a way, the connecting piece 23, the detector 10 and the circuitry 12 as a whole may be connected to the upper cylinder 20 and the lower cylinder 22.

Cables (not shown) for transferring electric power, data and/or signals can be passed through the central through hole 23d of the connecting piece 23 for transferring electric power, data and/or signals between system components (such as the alarm 14 and the detector 10 on an upper side of the connecting piece 23, as well as the circuitry 12 and a power supply box 5 on a lower side of the connecting piece 23 as shown in fig. 2) on two sides of the connecting piece 23. In the present invention, the detector 10 may be any conventional detector for monitoring radioactive substances, such as a gamma ray detector, a neutron detector, etc.. The circuitry 12 can be in a form of an integrated circuit board. In addition, in order to reduce influence from external shock on the detector, between the detector 10 and the upper end wall 23a of the connecting piece 23 can is provided a shock absorbing pad 50 for shock absorption as shown in fig. 3. The detector 10 at its top portion is also preferably provided with a shock absorbing pad 50a as shown in fig. 4.

The connecting piece 23 is used for positioning the detector 10 and the circuitry 12, and the central flange 23c of the connecting piece 23 during being assembled is used for limiting positions of the upper and lower cylinders 20 and 22, to facilitate mounting and precise positioning of various components of the device 1. After assembled, the outer circumferential surface of the central flange 23c of the connecting piece 23 is substantially flushed with the outer circumferential surfaces of the upper cylinder 20 and the lower cylinder 22, and is closely connected thereto, meanwhile portions of the connecting piece 23 other than the central flange 23c are covered by the housing 2 and are not visible from outside.

Now refer to fig. 4. The alarm 14 can be an acoustic, optical or electrical alarm, or can also be an alarm that making an alarm by sending wireless communication signals or wire communication signals. For example, the alarm 14 can include an alarm lamp, a buzzer and/or an antenna. There is no doubt that the alarm 14 can also be any combination of the above mentioned various types of alarms. When the alarm 14 comprises an optical alarm, it is preferably disposed adjacent the top portion (atop the upper cylinder 20 as shown in fig. 2) of the housing 2, so that light signals emitted by the alarm lamp of the alarm 14 can be observed apparently to thereby quickly attract relevant persons' attention. Thus, as shown in fig. 4, the portion (i.e. an outer housing 42 as shown in fig. 4) of the housing 2 that encases the alarm 14 can be made of a transparent or translucent material for light transmission. The outer housing 42 of the alarm can be independent from the upper cylinder 20. In the embodiment shown in fig. 4, the outer housing 42 of the alarm can be connected to the upper cylinder 20 by means of a connecting piece 43. Specifically, the outer housing 42 of the alarm and the upper cylinder 20 are connected to upper and lower sides of the connecting piece 43 by appropriate connecting means (such as thread connection or snap connection), respectively. A seal ring 40a is preferably provided at where the outer housing 42 of the alarm is connected to the connecting piece 42 and where the upper cylinder 20 is connected to the connecting piece 42, respectively, to thereby prevent foreign matter from entering into the inside of the device 1 of the present invention.

When the detector 10 detects radioactive substances being carried by the detected objects or persons and the alarm 14 receives alarm command signals from the circuitry 12, the alarm 14 can make an alarm by any of an acoustic signal, an optical signal, an electrical signal, a wireless communication signal and a wire communication signal, or by any combination thereof.

Furthermore, the housing 2 further comprises a top cover 4 so as to close the housing 2 from the top portion to protect each component therein. In the embodiments shown in figs. 2 and 4, the top cover 4 is connected to an upper end of the housing 42 in a manner of thread connection or snap connection. A seal ring 40b is disposed at where the top cover 4 and the outer housing 42 are connected (see fig. 4) to prevent foreign matter from entering into the inside of the device 1 of the present invention.

The outer housing 42 and the top cover 4 are advantageous in the following relevant aspects: the outer housing 42 of the alarm, the housing 2 and the top cover 4 can be formed separately, which not only is good to make the outer housing 42 of the alarm with a material different from that of the housing 2 and the top cover 4, but also makes mounting of the alarm 14 relatively convenient.

See figs. 1, 2 and 5, the housing 2 is provided at an lower end thereof with a mounting disc 24 which extends transversely to the longitudinal axis A and which has a diameter larger than that of the cylindrical housing 2. The mounting disc 24 is fixedly connected to the lower end of the housing 2 in a conventional connecting manner (such as rivet connection, welded connection, etc.).

See figs. 1-2 and figs. 5-7, the base 3 is designed to be detachably connected to the mounting disc 24. The base 3 is configured to have a disc shape extending transversely to the longitudinal axis A, with a round opening at the center thereof.

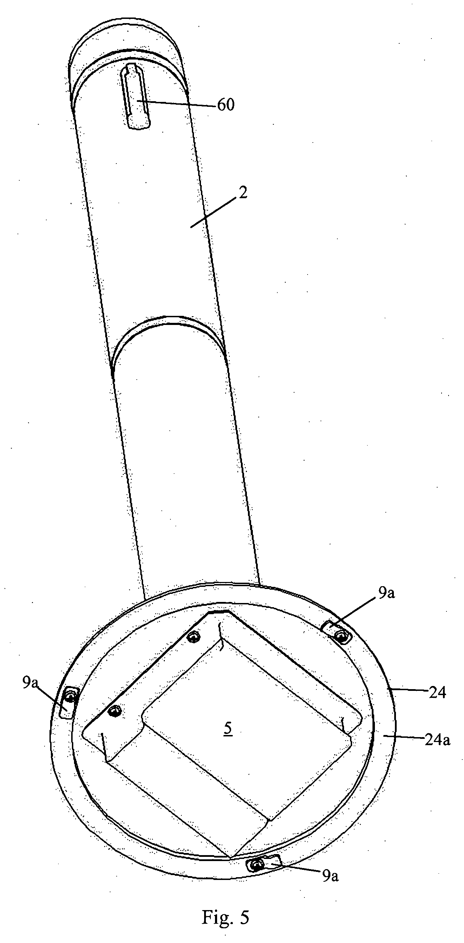

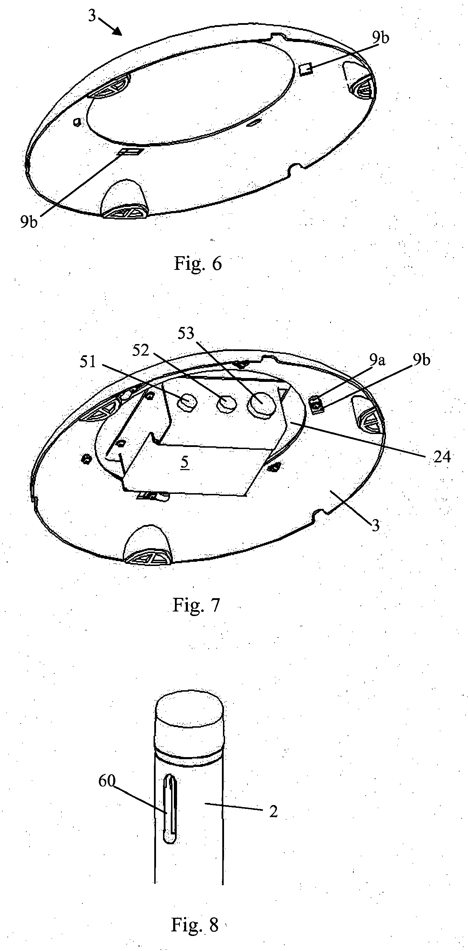

Figs. 5-7 clearly illustrate how to connect the base 3 to the mounting disc 24. The mounting disc 24 has at a place in the vicinity of an outer rim thereof a downwardly projecting mounting flange 24a. Three engagement hooks 9a are provided on the mounting flange 24a in a circumferential direction, and preferably, are arranged at equal intervals in the circumferential direction. Correspondingly, the base 3 is provided in the circumferential direction thereof with three notches 9b (one of them is sheltered in fig. 6) corresponding to the three engagement hooks 9a. Upon connection, it only needs to align the three engagement hooks 9a of the mounting disc 24 with the three notches 9b on the base 3, then gently rotate the base 3 or the housing 2 about the longitudinal axis A, the three engagement hooks 9a may in turn engage the corresponding three notches 9b so that the two portions are connected to each other. Then, the base 3 and the mounting disc 24 in the lower portion of the housing are tightened by auxiliary screws for fixed connection. It will be appreciated that it is also possible to dispose other numbers of engagement hooks and the corresponding number of notches. Further, it is also possible to dispose the engagement hooks on the base and the notches on the mounting disc in other embodiments. In other embodiments, it is also possible to use other engagement structures or members different from the engagement hooks and notches.

As shown in fig. 7, the device 1 further comprises a power supply box 5 for containing storage batteries, which power supply box 5 is fixedly mounted below the mounting disc 24 by a fastener, such as a screw, and is encased within the base 3. The power supply box is rectangular in the shown embodiment. Those skilled in the art will appreciate that it is also possible for the power supply box to have a round shape or other suitable shapes. The power supply box 5 also contains power cables to be connected to an external power supply for charging the storage batteries. As shown in fig. 7, the power supply box 5 is further provided with: a power switch 51 for starting or stopping operation of the device 1; a power supply interface 52 for pulling out or retracting the power cables; an internet cable interface 53 for communicating the device 1 with the outside (such as a main control console, etc.) in a wire communication manner, wherein, the power supply interface 52 and the internet cable interface 53 can be provided with a water-proof cover.

Alternatively, the housing 2 can be further provided with a main control board (not shown) which is electrically connected to the circuitry 12 so that an operator can contact and operate the main control board to thereby control operation of the device.

Fig. 2 and Fig. 8 illustrate that at two sides of the cylindrical housing 2 of the portable radioactive substance monitoring device of the present invention are provided lugs 60, the positions of which on the housing 2 are adapted to cooperate with other standard isolation piles. In such a manner, the lugs 60 during use are connected to an isolation belt so as to provide isolation belt(s) between the device 1 of the present invention and the standard isolation piles to thereby form a monitoring area or passage to facilitate radioactive substance monitoring of pedestrians and luggage.

In the prior art, a standard isolation pile has a height of about 1 m and a diameter of generally about 60mm. In the present embodiment, the radioactive substance monitoring device of the present invention is configured to have an overall height of about 1m, the housing 2 has a diameter of about 60-100mm, such as 80mm, and the base 3 has a diameter of about 300-360mm. Therefore, the monitoring device of the present invention has a general profile substantially similar to that of a standard isolation pile, and can be used well cooperatively therewith. It should be appreciated that these sizes are merely illustrative and not intended to restrict the present invention. The monitoring device 1 can be configured to have other appropriate sizes in dependence of application requirements, as long as the device is convenient to carry and flexible to use.

The housing 2 can be made of any suitable material, such as a metallic material, plastic, etc.. The mounting disc 24 can be made of same material as that of the housing. The base 3 is preferably made of a material of greater rigidity than that of the housing so as to be of sufficient strength to support the housing.

In the following, a method of using the portable radioactive substance monitoring device of the present invention and an operation process thereof are described.

### 1. Transporting

First of all, the portable radioactive substance monitoring device of the present invention is transported to destinations, such as stations, custom houses or public places, and so on, by ordinary transportation facilities according to requirements for safety inspection. During transportation, it is easy to detach the housing 2 (including the mounting disc 24 fixedly connected thereto) of the device 1 and the contents thereof from the base 3. Due to low requirements for transportation conditions, the base 3 can be transported by taking simple anti-damage measures or even without taking any measures. The detached housing 2 is quite small in volume so that it is easy to be transported just by taking simple anti-shock measures, such as using shock-insulation pads. Because the device of the present invention is small in volume, light in weight and the detached components are much smaller in volume, it is possible to handle them manually and carry them by small vehicles, or even tricycles, so that transporting them is magnificently convenient and the transportation cost is quite low.

### 2. Assembling

The device 1 is assembled after being transported to the destination: first aligning the three engagement hooks 9a on the mounting disc 24 of the device with the corresponding three notches 9b in the base 3, then slightly rotating any one of the two about the longitudinal axis A of the housing 2 to insert the engagement hooks 9a into the corresponding notches 9b, respectively; next fastening the base and the mounting disc together by means of auxiliary screws. In such a manner, the device 1 can be easily assembled into a whole.

### 3. Arranging

Then, according to practical requirements for stations, custom houses or public places, the device 1 and several standard isolation piles are arranged at intervals at appropriate places on two sides of an entrance where radioactive substance monitoring is desired, or the device and several standard piles are arranged at intervals to form an entrance passage. Besides, between the devices 1 of the present invention or between the device 1 and other standard isolation piles is provided isolation belt(s) by means of the lugs 60 on two sides of the housing 2 of the device 1 to form a monitoring area or passage so as to conduct radioactive substance monitoring of pedestrians or luggage passing through the entrance. The present device can be freely moved and arranged according to practical requirements due to characteristics thereof, and can be conveniently used together with the standard isolation piles due to sizes thereof approximate to those of the standard isolation piles. It is possible to use one or more devices 1 of the present invention and to freely combine it/them with standard isolation piles or other protective gratings conveniently and quickly in accordance with practical requirements.

### 4. Monitoring (operation)

Open the switch of the device after being arranged, and the device starts to work at this time.

When the detector 10 in the portable radioactive substance monitoring device 1 of the present invention has detected radioactive substances carried by pedestrians or contained in luggage that pass through the entrance passage, the detector 10 generates electrical signals which after being amplified are output to the circuitry 12 to be processed. The circuitry 12 subsequently generates alarm command signals according to the received electrical signals and transmits the alarm command signals via cables to the alarm 14 on the top portion of the device. After receiving the alarm command signals, the alarm 14 flickers the alarm lamp and buzzes the buzzer so as to quickly notify safety inspectors at the entrance that radioactive substances have been detected. Thereby, the safety inspectors can immediately take corresponding measures to intercept suspects or luggage that may carry radioactive substances for further inspection.

If desired, the alarm 14 also can transmit the alarm signals by means of an antenna in a wireless communication manner to the main control console of the station, the custom house or the public place, or the device 1 transmit the alarm signals in a wire communication manner to the main control console so as to notify monitoring persons of the main control console that at certain entrance a person or a piece of luggage that carries radioactive substances has been detected, so that the monitoring persons of the main control console can know well conditions at each entrance and take effective measures timely to protect public safety.

### 5. Storing

Turn off the switch of the device after the safety inspection is finished, detach the device, then transport it to next destination or store it in the storehouse. Small storing space is required due to small volume of the device of the present invention.

The portable radioactive substance monitoring device of the present invention configured as above is featured by closely fitting of the integral structure, small volume, aesthetic appearance, convenient carryover, flexibility and convenience when using. The base preferably is designed to be detachable. When transportation is desired, the base of relatively greater size in the present device is detachable from the device, thereby greatly reducing space occupied by the device when being transported. Moreover, as the base doesn't have any important components, anti-shock or anti-damage measures during transportation are only necessary to the housing and the important components contained therein, while ordinary transportation measures are enough to the base, which can greatly reduce transportation cost. In addition, thread connections are employed where the components of the device of the present invention are connected to one another and seal rings are used to seal these components for the purpose of water proofing and dust proofing, so as to adapt the device of the present invention to various environment requirements.

As compared with the existing large-scale radioactive substance monitoring devices, the portable radioactive substance monitoring device of the present invention is advantageous as follows: it is applicable with no limitation to specified places, its light weight and small volume make it possible to carry the device to any desired destination and make it quick and convenient to be placed. Therefore, with respect to the existing large-scale radioactive substance monitoring devices, the portable radioactive substance monitoring device of the present invention has non-replaceable effects and advantages, prominent technical characteristics and economic benefit, thereby is widely applicable for radioactive substance monitoring at entrances passage of stations, airports, custom houses, public places and so on. Owing to easy mounting, convenient transportation, quick and easy arrangement, fast monitoring as well as flexible and convenient application, the portable radioactive substance monitoring device of the present invention has characteristics of wide practicality and excellent adaptability.

It should be noted that the illustrative embodiments described herein set forth the preferred embodiments of the present invention, but are not intended to restrict the scope of the present invention in any way. For example, in the embodiments of the present invention, the cylindrical housing of the device comprises two separate components, i.e. the upper cylinder and the lower cylinder. Nevertheless, it will be appreciated by those skilled in the art that the cylindrical housing, if necessary or desired, also can be formed into an integrally shaped piece within which a detector, a circuitry and so on are contained. The aforesaid teachings disclosed herein permit various variations and modifications to the present invention without departing from the scope of the present invention.

## Claims

1. A portable radioactive substance monitoring device (1) comprising:
an elongated cylindrical housing (2) defining a longitudinal axis (A) along a length direction thereof, said housing including a hollow section within which are mounted:
a detector (10) for monitoring radioactive substances;
a circuitry (12) connected to said detector, for processing detection signals from said detector; and
an alarm (14) connected to said circuitry (12), for sending out alarm signals upon detection of radioactive substances; and
a base (3) to which said housing (2) at a lower end thereof is connected;
**characterized in that** said housing (2) is provided with at least one first engagement member (9a; 9b), and said base (3) is provided with at least one second engagement member (9b; 9a) corresponding to said at least one first engagement member, shapes of said first and second engagement members being configured to be detachably engaged with each other;
wherein at the lower end of said housing (2) is provided a mounting disc (24) extending transversely to said longitudinal axis, and on said mounting disc (24) is disposed said first engagement member (9a; 9b);
and wherein said mounting disc (24) is non-detachably fixedly connected to the lower end of the housing (2).

2. The device according to claim 1, **characterized in that** said first engagement member (9a; 9b) and said second engagement member (9b; 9a) are configured to rotate said housing (2) about said longitudinal axis (A) when said housing (2) is placed on said base (3) so that said first engagement member and said second engagement member corresponding thereto are engaged with each other.

3. The device according to claim 1 or 2, **characterized in that** said at least one first engagement member (9a; 9b) are a plurality of said first engagement members which are circumferentially evenly distributed, and said at least one second engagement member (9b; 9a) are a plurality of said second engagement members that are distributed the same as said plurality of said first engagement members.

4. The device according to claim 1 or 2, **characterized in that** said first engagement member is an engagement hook (9a), and said second engagement member is a notch (9b) capable of receiving said engagement hook (9a); or
said second engagement member is an engagement hook (9a), and said first engagement member is a notch (9b) capable of receiving said engagement hook (9a).

5. The device according to claim 1, **characterized in that** said base (3) has a disc shape extending transversely to said longitudinal axis.

6. The device according to claim 1, **characterized in that** said housing (2) comprises a hollow upper cylinder (20), a hollow lower cylinder (22), and a connecting piece (23) for interconnecting said upper cylinder (20) and said lower cylinder (22).

7. The device according to claim 6, **characterized in that** said connecting piece (23) is disposed between said upper cylinder (20) and said lower cylinder (22), and said upper cylinder (20) and said lower cylinder (22) are connected to said connecting piece (23) from two opposite sides of said connecting piece, respectively.

8. The device according to claim 7, **characterized in that** said connecting piece (23) has an outwardly extending central flange (23c) against which said upper cylinder (20) and said lower cylinder (22) rest from said two sides, respectively.

9. The device according to said claim 7, **characterized in that** said connecting piece (23) further has a through hole (23d) extending along said longitudinal axis (A) to allow cables for transferring electric power, data and/or signals between said upper cylinder (20) and said lower cylinder (22) to pass therethrough.

10. The device according to claim 7, **characterized in that** there is a seal ring (40) disposed at where said upper cylinder (20) and said lower cylinder (22) are connected to said connecting piece (23).

11. The device according to claim 7, **characterized in that** said connecting piece (23) has an upper end wall (23a) and a lower end wall (23b), each of which forms as a mounting base for mounting one of said detector (10) and said circuitry (12) and the other, respectively.

12. The device according to claim 7, **characterized by** further comprising a stop mechanism for preventing looseness and/or rotation of said upper cylinder (20) and/or said lower cylinder (22) relative to said connecting piece (23).

13. The device according to claim 12, **characterized in that** said connecting piece (23) has an outer peripheral wall (23f) in which an opening is provided; and
said stop mechanism comprises a pressing block (25) which is provided within said connecting piece (23) and a fastener (26) by which at least a portion of said pressing block (25) is passed through said opening and pressed towards inner walls of said upper cylinder (20) and/or said lower cylinder (22).

14. The device according to claim 13, **characterized in that** said fastener (26) is an adjustable fastener.

15. The device according to any one of claims 6-14, **characterized in that** said connecting piece (23) is substantially cylindrical in shape.

16. The device according to claim 11, **characterized in that** said circuitry (12) is fixedly connected to the lower end wall of said connecting piece (23) and is located within said lower cylinder (22), while said detector (10) is mounted above the upper end wall of said connecting piece (23) and is located within said upper cylinder (20).

17. The device according to claim 16, **characterized in that** between said detector (10) and the upper end wall (23b) of said connecting piece (23) is provided a shock absorbing piece (50) for shock absorption.

18. The device according to claim 1, **characterized in that** said detector (10) includes a gamma ray detector and/or a neutron detector.

19. The device according to claim 1, **characterized in that** said alarm (14) makes an alarm by any one of acoustic signals, light signals, electrical signals, wireless communication signals and wire communication signals, or by any combination thereof.

20. The device according to claim 1, **characterized in that** a portion (42) of said housing (2) that encases said alarm (14) is made of a transparent or translucent material.

21. The device according to claim 1, **characterized in that** said alarm (14) is disposed adjacent to a top portion of said housing (2).

22. The device according to claim 1, **characterized in that** said housing (2) further comprises a detachable top cover (4).

23. The device according to claim 1, **characterized in that** said device (1) further comprises a power supply box (5) for containing batteries, said power supply box (5) being mounted below said mounting disc (24) and being encased within said base (3).

24. The device according to claim 23, **characterized in that** said power supply box (5) further comprises a space for accommodating power cables.

25. The device according to claim 1, **characterized in that** said device (1) further comprises:
a switch (51) for starting or stopping operation of said device (1); and/or
an internet cable interface (53) for communication with the outside.

26. The device according to claim 1, **characterized in that** said housing (2) is further provided with lugs (60) for connecting an isolation belt.

27. The device according to claim 26, **characterized in that** positions of said lugs (60) are configured to cooperate with other standard isolation piles so as to provide an isolation belt between said device (1) and said standard piles.

28. The device according to claim 1, **characterized in that** an overall height of said device (1) is substantially the same as a height of said standard isolation pile.

29. The device according to claim 1, **characterized in that** a general profile of said device (1) is substantially similar to a profile of said standard isolation pile.

## Patentansprüche

1. Tragbares Gerät (1) zur Überwachung radioaktiver Substanzen, umfassend:
ein längliches zylindrisches Gehäuse (2), das eine Längsachse (A) entlang einer Längsrichtung davon definiert, wobei das Gehäuse einen hohlen Abschnitt aufweist, in dem die nachfolgenden Elemente montiert sind:
ein Detektor (10) zur Überwachung radioaktiver Substanzen;
Schaltungen (12), die mit dem Detektor verbunden sind, zur Verarbeitung von Detektionssignalen aus dem Detektor, und
ein mit den Schaltungen (12) verbundener Alarm (14) zum Senden von Alarmsignalen bei der Erkennung radioaktiver Substanzen und
ein Unterteil (3) mit dem das Gehäuse (2) an einem unteren Ende davon verbunden ist;
**dadurch gekennzeichnet, dass** das Gehäuse (2) mit mindestens einem Eingriffselement (9a; 9b) versehen ist, und das Unterteil (3) mit mindestens einem zweiten Eingriffselement (9b; 9a) versehen ist, das dem mindestens einen ersten Eingriffselement entspricht, wobei die Formen der ersten und zweiten Eingriffselemente zum lösbaren Eingriff ineinander konfiguriert sind,
wobei am unteren Ende des Gehäuses (2) eine Montagescheibe (24) vorgesehen ist, die sich quer zur Längsachse erstreckt, und wobei auf der Montagescheibe (24) das erste Eingriffselement (9a; 9b) angeordnet ist,
und wobei die Montagescheibe (24) unlösbar und fest mit dem unteren Ende des Gehäuses (2) verbunden ist.

2. Gerät nach Anspruch 1, **dadurch gekennzeichnet, dass** das erste Eingriffselement (9a; 9b) und das zweite Eingriffselement (9b; 9a) derart konfiguriert sind, dass sie das Gehäuse (2) um die Längsachse (A) drehen, wenn das Gehäuse (2) auf dem Unterteil (3) liegt, damit das erste Eingriffselement und das diesem entsprechende zweite Eingriffselement miteinander in Eingriff treten.

3. Gerät nach Anspruch 1 oder 2, **dadurch gekennzeichnet, dass** es sich beim mindestens einen ersten Eingriffselement (9a; 9b) um eine Mehrzahl erster Eingriffselemente handelt, die in Umfangsrichtung gleichmäßig verteilt sind, und es sich beim mindestens einen zweiten Eingriffselement (9b; 9a) um eine Mehrzahl zweiter Eingriffselemente, die genau so verteilt sind, wie die Mehrzahl erster Eingriffselemente.

4. Gerät nach Anspruch 1 oder 2, **dadurch gekennzeichnet, dass** das erste Eingriffselement ein Eingriffshaken (9a) und das zweite Eingriffselement (9b) eine Nut ist, die den Eingriffshaken (9a) aufnehmen kann; oder
das zweite Eingriffselement ein Eingriffshaken (9a) ist und das erste Eingriffselement eine Nut (9b) ist, die den Eingriffshaken (9a) aufnehmen kann.

5. Gerät nach Anspruch 1, **dadurch gekennzeichnet, dass** das Unterteil (3) scheibenförmig ist und sich quer zur Längsachse erstreckt.

6. Gerät nach Anspruch 1, **dadurch gekennzeichnet, dass** das Gehäuse (2) einen hohlen oberen Zylinder (20), einen hohlen unteren Zylinder (22) und ein Verbindungsstück (23) zur Verbindung des oberen Zylinders (20) und des unteren Zylinders (22) umfasst.

7. Gerät nach Anspruch 6, **dadurch gekennzeichnet, dass** das Verbindungsstück (23) zwischen dem oberen Zylinder (20) und dem unteren Zylinder (22) angeordnet ist, und der obere Zylinder (20) und der untere Zylinder (22) mit dem Verbindungsstück (23) jeweils von zwei einander gegenüberliegenden Seiten des Verbindungsstücks aus verbunden sind.

8. Gerät nach Anspruch 7, **dadurch gekennzeichnet, dass** das Verbindungsstück (23) einen sich nach außen erstreckenden zentralen Flansch (23c) aufweist, an dem der obere Zylinder (20) und der untere Zylinder (22) jeweils auf zwei Seiten anliegen.

9. Gerät nach Anspruch 7, **dadurch gekennzeichnet, dass** das Verbindungsstück (23) ferner eine Durchgangsöffnung (23d) aufweist, die sich entlang der Längsachse (A) erstreckt, damit Kabel zur Übertragung elektrischer Energie, Daten und/oder Signale zwischen dem oberen Zylinder (20) und dem unteren Zylinder (22) dadurch laufen können.

10. Gerät nach Anspruch 7, **dadurch gekennzeichnet, dass** dort, wo der obere Zylinder (20) und der untere Zylinder (22) mit dem Verbindungsstück (23) verbunden sind, ein Dichtungsring (40) vorgesehen ist.

11. Gerät nach Anspruch 7, **dadurch gekennzeichnet, dass** das Verbindungsstück (23) eine obere Endwand (23a) und eine untere Endwand (23b) aufweist, die jeweils eine Montagebasis zur Montage eines und des jeweils anderen vom Detektor (10) und den Schaltungen (12) bilden.

12. Gerät nach Anspruch 7, **dadurch gekennzeichnet, dass** es ferner eine Stoppvorrichtung zur Verhinderung von Schlaffheit und/oder Rotation des oberen Zylinders (20) und/oder des unteren Zylinders (22) relativ zum Verbindungsstück (23) umfasst.

13. Gerät nach Anspruch 12, **dadurch gekennzeichnet, dass** das Verbindungsstück (23) eine äußere Peripheriewand (23f) aufweist, in der eine Öffnung vorgesehen ist, und
die Stoppvorrichtung einen Preßblock (25), der innerhalb des Verbindungsstücks (23) vorgesehen ist, und ein Verbindungselement (26) umfasst, mit dem mindestens ein Teil des Preßblocks (25) durch die Öffnung hindurch in Richtung der Innenwände des oberen Zylinders (20) und/oder des unteren Zylinders (22) gepresst wird.

14. Gerät nach Anspruch 13, **dadurch gekennzeichnet, dass** das Verbindungselement (26) ein verstellbares Verbindungselement ist.

15. Gerät nach einem der Ansprüche 6 - 14, **dadurch gekennzeichnet, dass** das Verbindungsstück (23) im Wesentlichen zylindrisch ist.

16. Gerät nach Anspruch 11, **dadurch gekennzeichnet, dass** die Schaltungen (12) fest mit der unteren Endwand des Verbindungsstücks (23) verbunden und innerhalb des unteren Zylinders (22) angeordnet ist, während der Detektor (10) oberhalb der oberen Endwand des Verbindungsstücks (23) montiert und innerhalb des oberen Zylinders (20) angeordnet ist.

17. Gerät nach Anspruch 16, **dadurch gekennzeichnet, dass** zwischen dem Detektor (10) und der oberen Endwand (23b) des Verbindungsstücks (23) ein Stoßdämpfer (50) zur Stoßdämpfung vorgesehen ist.

18. Gerät nach Anspruch 1, **dadurch gekennzeichnet, dass** der Detektor (10) einen Gammastrahlen- und/oder Neutronendetektor aufweist.

19. Gerät nach Anspruch 1, **dadurch gekennzeichnet, dass** der Alarm (14) einen Alarm einer der nachfolgenden Arten auslöst: akustische Signale, Lichtsignale, elektrische Signale, drahtlose Kommunikationssignale und verkabelte Kommunikationssignale oder eine Kombination davon.

20. Gerät nach Anspruch 1, **dadurch gekennzeichnet, dass** ein Teil (42) des Gehäuses (2), in dem der Alarm (14) enthalten ist, aus einem transparenten oder lichtdurchlässigen Material besteht.

21. Gerät nach Anspruch 1, **dadurch gekennzeichnet, dass** der Alarm (14) neben einem oberen Teil des Gehäuses (2) angeordnet ist.

22. Gerät nach Anspruch 1, **dadurch gekennzeichnet, dass** das Gehäuse (2) ferner einen abnehmbaren Oberdeckel (4) umfasst.

23. Gerät nach Anspruch 1, **dadurch gekennzeichnet, dass** das Gerät (1) ferner eine Spannungsversorgungsbox (5) umfasst, die Batterien enthält, wobei die Spannungsversorgungsbox (5) unter der Montagescheibe (24) montiert und im Unterteil (3) enthalten ist.

24. Gerät nach Anspruch 23, **dadurch gekennzeichnet, dass** die Spannungsversorgungsbox (5) ferner einen Raum zur Aufnahme von Stromkabeln umfasst.

25. Gerät nach Anspruch 1, **dadurch gekennzeichnet, dass** das Gerät (1) ferner umfasst:
einen Schalter (51) zum Starten oder Stoppen des Betriebs des Geräts (1) und/oder eine verkabelte Internet-Schnittstelle (53) zur Kommunikation mit der Außenwelt.

26. Gerät nach Anspruch 1, **dadurch gekennzeichnet, dass** das Gehäuse (2) ferner mit Laschen (60) zum Anschließen eines Isolationsgürtels versehen ist.

27. Gerät nach Anspruch 26, **dadurch gekennzeichnet, dass** Positionen der Laschen (60) derart konfiguriert sind, dass sie mit anderen standardmäßigen Isolationspfählen zusammenwirkt, um einen Isolationsgürtel zwischen dem Gerät (1) und den standardmäßigen Pfählen zu bilden.

28. Gerät nach Anspruch 1, **dadurch gekennzeichnet, dass** eine Gesamthöhe des Geräts (1) im Wesentlichen gleich einer Höhe des standardmäßigen Isolationspfahls ist.

29. Gerät nach Anspruch 1, **dadurch gekennzeichnet, dass** ein allgemeines Profil des Geräts (1) einem Profil des standardmäßigen Isolationspfahls im Wesentlichen ähnlich ist.

## Revendications

1. Dispositif portatif de contrôle de substance radioactive (1) comprenant :
un logement cylindrique allongé (2) définissant un axe longitudinal (A) le long d'une direction de longueur de celui-ci, ledit logement incluant une section creuse dans laquelle sont montés :
un détecteur (10) pour contrôler des substances radioactives ;
des circuits (12) reliés audit détecteur, pour traiter des signaux de détection en provenance dudit détecteur ; et
une alarme (14) reliée auxdits circuits (12), pour faire sortir des signaux d'alarme lors de la détection de substances radioactives ; et
une base (3) à laquelle ledit logement (2) est relié au niveau d'une extrémité inférieure de celui-ci ;
**caractérisé en ce que** ledit logement (2) est muni d'au moins un premier élément de mise en prise (9a ; 9b), et ladite base (3) est munie d'au moins un second élément de mise en prise (9b ; 9a) correspondant audit au moins un premier élément de mise en prise, des formes desdits premiers et seconds éléments de mise en prise étant configurées pour être en prise de façon amovible les unes avec les autres ;
dans lequel au niveau de l'extrémité inférieure dudit logement (2) un disque de montage (24) est prévu s'étendant de manière transversale par rapport audit axe longitudinal, et sur ledit disque de montage (24) est disposé ledit premier élément de mise en prise (9a ; 9b) ;
et dans lequel ledit disque de montage (24) est relié fixement de façon non amovible à l'extrémité inférieure du logement (2).

2. Dispositif selon la revendication 1, **caractérisé en ce que** ledit premier élément de mise en prise (9a ; 9b) et ledit second élément de mise en prise (9b ; 9a) sont configurés pour faire tourner ledit logement (2) autour dudit axe longitudinal (A) lorsque ledit logement (2) est placé sur ladite base (3) de sorte que ledit premier élément de mise en prise et ledit second élément de mise en prise correspondant à celui-ci sont en prise l'un avec l'autre.

3. Dispositif selon la revendication 1 ou 2, **caractérisé en ce que** ledit au moins un premier élément de mise en prise (9a ; 9b) est constitué par une pluralité de dits premiers éléments de mise en prise qui sont uniformément répartis de manière circonférentielle, et ledit au moins un second élément de mise en prise (9b ; 9a) est constitué par une pluralité de dits seconds éléments de mise en prise qui sont répartis de la même façon que ladite pluralité de dits premiers éléments de mise en prise.

4. Dispositif selon la revendication 1 ou 2, **caractérisé en ce que** ledit premier élément de mise en prise est un crochet de mise en prise (9a) et ledit second élément de mise en prise est une encoche (9b) susceptible de recevoir ledit crochet de mise en prise (9a) ; ou
ledit second élément de mise en prise est un crochet de mise en prise (9a) et ledit premier élément de mise en prise est une encoche (9b) susceptible de recevoir ledit crochet de mise en prise (9a).

5. Dispositif selon la revendication 1, **caractérisé en ce que** ladite base (3) a une forme de disque s'étendant de manière transversale par rapport audit axe longitudinal.

6. Dispositif selon la revendication 1, **caractérisé en ce que** ledit logement (2) comprend un cylindre supérieur creux (20), un cylindre inférieur creux (22), et une pièce de connexion (23) pour interconnecter ledit cylindre supérieur (20) et ledit cylindre inférieur (22).

7. Dispositif selon la revendication 6, **caractérisé en ce que** ladite pièce de connexion (23) est disposée entre ledit cylindre supérieur (20) et ledit cylindre inférieur (22), et ledit cylindre supérieur (20) et ledit cylindre inférieur (22) sont respectivement reliés à ladite pièce de connexion (23) à partir des deux côtés opposés de ladite pièce de connexion.

8. Dispositif selon la revendication 7, **caractérisé en ce que** ladite pièce de connexion (23) a une bride centrale s'étendant vers l'extérieur (23c) contre laquelle ledit cylindre supérieur (20) et ledit cylindre inférieur (22) reposent respectivement depuis lesdits deux côtés.

9. Dispositif selon la revendication 7, **caractérisé en ce que** ladite pièce de connexion (23) a en outre un trou traversant (23d) s'étendant le long dudit axe longitudinal (A) pour permettre à des câbles de transférer de l'énergie électrique, des données et/ou des signaux entre ledit cylindre supérieur (20) et ledit cylindre inférieur (22) pour passer à travers ces derniers.

10. Dispositif selon la revendication 7, **caractérisé en ce qu'**il y a une bague d'étanchéité (40) disposée là où ledit cylindre supérieur (20) et ledit cylindre inférieur (22) sont reliés à ladite pièce de connexion (23).

11. Dispositif selon la revendication 7, **caractérisé en ce que** ladite pièce de connexion (23) a une paroi d'extrémité supérieure (23a) et une paroi d'extrémité inférieure (23b), chacune d'elles formant comme une base de montage pour monter respectivement un dudit détecteur (10) et lesdits circuits (12) et l'autre.

12. Dispositif selon la revendication 7, caractérisé comme comprenant en outre un mécanisme d'arrêt pour empêcher le relâchement et/ou la rotation dudit cylindre supérieur (20) et/ou dudit cylindre inférieur (22) par rapport à ladite pièce de connexion (23).

13. Dispositif selon la revendication 12, **caractérisé en ce que** ladite pièce de connexion (23) a une paroi périphérique extérieure (23f) dans laquelle une ouverture est prévue ; et
ledit mécanisme d'arrêt comprend un bloc de pression (25) qui est disposé à l'intérieur de ladite pièce de connexion (23) et une attache (26) par laquelle au moins une partie dudit bloc de pression (25) est passée à travers ladite ouverture et pressée vers des parois intérieures dudit cylindre supérieur (20) et/ou dudit cylindre inférieur (22).

14. Dispositif selon la revendication 13, **caractérisé en ce que** ladite attache (26) est une attache réglable.

15. Dispositif selon n'importe laquelle des revendications 6 à 14, **caractérisé en ce que** ladite pièce de connexion (23) est sensiblement de forme cylindrique.

16. Dispositif selon la revendication 11, **caractérisé en ce que** lesdits circuits (12) sont reliés de manière fixe à la paroi d'extrémité inférieure de ladite pièce de connexion (23) et sont situés à l'intérieur dudit cylindre inférieur (22), tandis que ledit détecteur (10) est monté au-dessus de la paroi d'extrémité supérieure de ladite pièce de connexion (23) et est situé à l'intérieur dudit cylindre supérieur (20).

17. Dispositif selon la revendication 16, **caractérisé en ce qu'**entre ledit détecteur (10) et la paroi d'extrémité supérieure (23b) de ladite pièce de connexion (23) est disposée une pièce absorbant les chocs (50) pour l'absorption de choc.

18. Dispositif selon la revendication 1, **caractérisé en ce que** ledit détecteur (10) inclut un détecteur de rayons gamma et/ou un détecteur de neutrons.

19. Dispositif selon la revendication 1, **caractérisé en ce que** ladite alarme (14) établit une alarme par n'importe lequel de signaux acoustiques, de signaux lumineux, de signaux électriques, de signaux de communication sans fil et de signaux de communication câblés, ou par n'importe quelle combinaison de ceux-ci.

20. Dispositif selon la revendication 1, **caractérisé en ce qu'**une partie (42) dudit logement (2) qui englobe ladite alarme (14) est faite d'une matière transparente ou translucide.

21. Dispositif selon la revendication 1, **caractérisé en ce que** ladite alarme (14) est disposée adjacente à une partie supérieure dudit logement (2).

22. Dispositif selon la revendication 1, **caractérisé en ce que** ledit logement (2) comprend en outre un couvercle supérieur détachable (4).

23. Dispositif selon la revendication 1, **caractérisé en ce que** ledit dispositif (1) comprend en outre une boîte d'alimentation en énergie (5) pour contenir des batteries, ladite boîte d'alimentation en énergie (5) étant montée au-dessous dudit disque de montage (24) et étant englobée dans ladite base (3).

24. Dispositif selon la revendication 23, **caractérisé en ce que** ladite boîte d'alimentation en énergie (5) comprend en outre un espace pour loger des câbles électriques.

25. Dispositif selon la revendication 1, **caractérisé en ce que** ledit dispositif (1) comprend en outre :
un commutateur (51) pour démarrer ou arrêter le fonctionnement dudit dispositif (1) ; et/ou
une interface de câble Internet (53) pour communication avec l'extérieur.

26. Dispositif selon la revendication 1, **caractérisé en ce que** ledit logement (2) est en outre muni d'oreilles (60) pour relier une ceinture isolante.

27. Dispositif selon la revendication 26, **caractérisé en ce que** des positions desdites oreilles (60) sont configurées pour coopérer avec d'autres empilements isolants standards afin de définir une ceinture isolante entre ledit dispositif (1) et lesdits empilements standards.

28. Dispositif selon la revendication 1, **caractérisé en ce qu'**une hauteur complète dudit dispositif (1) est sensiblement la même qu'une hauteur dudit empilement isolant standard.

29. Dispositif selon la revendication 1, **caractérisé en ce qu'**un profil général dudit dispositif (1) est sensiblement similaire à un profil dudit empilement isolant standard.
